# EUROPEAN PATENT APPLICATION

(11) **EP 2 809 029 A1**
(43) Date of publication of application: **03.12.2014**
(21) Application number: 12724532.2
(22) Date of filing: 23.01.2012
(51) Int. Cl.: H04L 9/10, G06F 21/10, G06F 21/60, G09C 1/00, H04N 5/765, H04N 5/91, H04N 7/173

(54) **RECORDING APPARATUS, TERMINAL APPARATUS, AND CONTENT TRANSFER SYSTEM**

(71) Applicant: Panasonic Corporation, Kadoma-shi, Osaka 571-8501 (JP)
(72) Inventor: KUNO, Yoshiki, Osaka-shi, Osaka 540-6207 (JP); FUKUDA, Hideki, Osaka-shi, Osaka 540-6207 (JP)
(74) Representative: Grünecker, Kinkeldey, Stockmair & Schwanhäusser
(86) International application number: PCT/JP2012/000373
(87) International publication number: WO 2013/111174

(57) **Abstract**

A content transmission system transmits content, using a cloud computing system. A recording device records the content to a local storage or a cloud storage. When the local storage is selected as a recording destination, the recording device generates an encryption key, encrypts the content with the key, and generates management information associating the key with an address of the cloud storage. The recording device furthermore determines whether a portable recording medium is connected thereto. If connected, the recording device records the key and the management information to the portable recording medium. The terminal device first reads the key and the management information from the portable recording medium. The terminal device then accesses the cloud storage without performing user authentication, referring to the management information, and downloads the encrypted content from the cloud storage. Furthermore, the terminal device decrypts the content from the encrypted content, using the key.

## Description

### [Technical Field]

The present invention relates to technology of transmitting content via a network, and particularly to technology of encrypting content to be transmitted, and decrypting the content.

### [Background Art]

A home-use recording device, such as a hard disk recorder, records content to a local storage. Here, the term "local storage" refers to recording media mounted on a recording device, such as a hard disk drive (HDD), a memory card, and an optical disc. Content recorded on a local storage is usually reproduced by a display device connected to the recording device, or a display device connected to a home network that the recording device belongs to.

In recent years, portable terminal devices have been rapidly sophisticated as represented by smartphones. Accordingly, there has been increasing demand for watching content outside the home by using a portable terminal device. Examples of such content include, in particular, broadcast programs recorded by a home-use recording device, and content reproduced from an optical disc by a home-use reproducing device. One approach to meet the demand is to copy content to, among recording media constituting a local storage, a portable recording medium attachable to a portable terminal device such as a memory card, and allow the portable terminal device to reproduce the content from the portable recording medium. However, since portable recording media are generally smaller in capacity than stationary recording media, there is a restriction on the size of content recordable on a portable recording medium.

Considering the above, technolgy of transmitting content from a recording/reproducing device located in the home to a portable terminal device located outside the home is being developed. This is because there is no restriction on the size of content when the content is transmitted via the Internet. It is necessary, however, to protect the copyright of the content by putting restrictions on copying and viewing the content outside the home, for example by encrypting the content before transmitting it. DTCP-IP (Digital Transmission Content Protection over Internet Protocol) is well known as an example of technology of transmitting content under copyright protection via a home LAN. DTCP-IP, however, can not be used for transmission of content from the home to the outside. Alternatives to the DTCP-IP content transmission technology are disclosed in Patent Literature 1 and Non-Patent Literature 1, for example. According to the technology disclosed in Patent Literature 1, mutual authentication is first performed between devices transmitting and receiving content so that the devices share the information used in the authentication such as an encryption key. Next, when the receiving device located outside the home connects to the transmitting device located in the home, the devices perform mutual authentication again by using the information used in the previous authentication. Thus, the content transmitted from the transmitting device located in the home to the outside via the Internet can be reproduced only on the receiving device that has been authenticated in advance in the home. Consequently, viewing the content outside the home is allowed only for the personal use. Meanwhile, according to the technology disclosed in Non-Patent Literature 1, encrypted content is transmitted from a server to a portable terminal device via the Internet, and a key for decrypting the encrypted content is transmitted from the server to the portable terminal device via a memory card. The portable terminal device can decrypt and reproduce the encrypted content only when the portable terminal device is permitted to read the key from the memory card. This technolgy thus protects the copyright of the content.

### [Citation List]

### [Patent Literature]

[Patent Literature 1] Japanese Patent Application Publication No.2009-225074
[Patent Literature 2] Japanese Patent No.4620158

### [Non-Patent Literature]

[Non-Patent Literature 1] NAKANO Kazunori and two other authors, "SDconnect TM Digital Rights Management System Technology Using SD Memory Card", TOSHIBA REVIEW, TOSHIBA CORPORATION. July 1, 2008, Vol. 63, No. 7. pp. 31-41.

### [Summary of Invention]

### [Technical Problem]

With conventional content transmission technologies, content is directly transmitted from a local storage located in the home to a portable terminal device located outside the home. In such a case, the portable terminal device needs to access the home network via a public network such as a mobile telephone network. The access requires a user to validate him/herself by user authentication. Moreover, the user needs to use the portable terminal device to directly control the recording/reproducing device located in the home in order to power it on and to cause it to perform operations for reproduction. However, since a relatively long time is required for the user authentication and for the remote control of the recording/reproducing device by the portable terminal device, the user needs to wait a long time until reproduction of the content will be actually started. Furthermore, the remote control of the recording/reproducing device by the portable terminal device is likely to interfere with other operations of the recording/reproducing device such as scheduled recording. When the remote control interferes with other operations, it is in some cases inevitable that the remote control will be restricted.

One approach to solve the problems above is to upload content from a recording/reproducing device to a cloud storage. Unlike local storages, cloud storages are located on a network outside the home such as the Internet. Hence, the case of transmitting content from a cloud storage to a portable terminal device does not need the remote control of the recording/reproducing device by using the portable terminal device, unlike the case of transmitting content from a local storage. Consequently, the stated approach solves one of the problems that is caused by the remote control.

However, conventional technology requires user authentication even when a user accesses a cloud storage via a portable terminal device. In particular, when the user accesses the cloud storage by using a plurality of portable terminal devices alternately, user authentication is requested every time the user switches between the portable terminal devices. The necessity of such user authentication renders the usability of the cloud storage similar to existing services for motion picture distribution and bulletin boards for pictures, and therefore prevents advantages of cloud storages from attracting users. Also, since it is necessary in user authentication to provide the cloud storage with personal information such as an ID and a password via a network, there is a risk of leakage of the personal information in the process of the authentication.

The present invention aims to solve the problems above, and in particular, aims to provide a system that enables users to save time and effort in transmitting content from a recording device to a terminal device via a cloud storage, and reducing the risk of personal information leakage.

### [Solution to Problem]

A content transmission system according to the present invention is a system for transmitting content by using a cloud storage, and includes a local storage, a cloud storage, a recording device, and a terminal device. The local storage includes a plurality of recording media; one of the recording media is a portable recording medium. The cloud storage is located on a network. The recording device records content to either the local storage or the cloud storage. The terminal device reproduces content from the cloud storage. The recording device includes a content acquiring unit, a control unit, a recording unit, an encryption unit, and a first communication unit. The content acquiring unit acquires content. The control unit selects a recording destination of the content between the local storage and the cloud storage. The recording unit records the content into the local storage when the portable recording medium has been detachably connected to the recording unit and the local storage is selected as the recording destination. When the cloud storage is selected as the recording destination of the content, the encryption unit generates an encryption key, encrypts the content by using the encryption key, and generates management information that associates the encryption key with an address of the cloud storage. The first communication unit uploads the encrypted content to the cloud storage. When the cloud storage is selected as the recording destination of the content, the control unit determines whether the portable recording medium is connected to the recording unit. When determining that the portable recording medium is connected to the recording unit, the control unit causes the recording unit to record the encryption key and the management information to the portable recording medium. The terminal device includes a reading unit, a second communication unit, a decryption unit, and a reproducing unit. The reading unit, to which the portable recording medium is detachably connected, reads the encryption key and the management information from the portable recording medium. The second communication unit accesses the cloud storage with reference to the management information, and downloads the encrypted content from the cloud storage. The decryption unit decrypts the content from the encrypted content by using the encryption key. The reproducing unit reproduces the content.

### [Advantageous Effects of Invention]

In the content transmission system according to the present invention, the recording device records the encryption key and management information to the portable recording medium, which has been connected to the recording unit after the generation of the encryption key. Subsequently, the portable recording medium is detached from the recording device, and is connected to the terminal device. The terminal device refers to the encryption key and the management information in the portable recording medium. The fact that the encryption key is recorded on the portable recording medium usually means that the user who has connected the portable recording medium to the terminal device is the person who uploaded the content from the recording device to the cloud storage, or another person who took over the right to reproduce the content from the person uploaded the content. Hence, the terminal device may allow the user to access the cloud storage without performing user authentication. Furthermore, since user authentication is unnecessary when the user accesses the cloud storage, there is no risk that the personal information of the user will be leaked. Thus, the content transmission system according to the present invention enables the users to save time and effort in transmitting content from the recording device to the terminal device via the cloud storage, and reduces the risk of personal information leakage.

### [Brief Description of Drawings]

Fig. 1 is a schematic diagram showing a content transmission system according to Embodiment 1 of the present invention.
Fig. 2 is a block diagram of a recording/reproducing device 102 shown in Fig. 1.
Fig. 3 is a schematic diagram showing the data structure of management information.
Fig. 4 is a block diagram showing the structure of a portable terminal device 103 shown in Fig. 1.
Fig. 5 is a schematic diagram showing a process through which content is transmitted from the recording/reproducing device 102 to the portable terminal device 103 via a cloud storage 101.
Fig. 6A is a schematic diagram showing a process performed in a content transmission system according to Embodiment 2 of the present invention, through which a recording/reproducing device encrypts a plurality of title keys and writes them into a memory card, and FIG. 6B is a schematic diagram showing the data structure of provisional management information 610.
Fig. 7A is a schematic diagram showing a process through which the recording/reproducing device encrypts a single set of content by using a single title key, and uploads the content to the cloud storage, and Fig. 7B is a schematic diagram showing the data structure of list information.
Fig. 8 is a schematic diagram showing a process performed in the content transmission system according to Embodiment 2 of the present invention, through which a portable terminal device downloads encrypted content from the cloud storage.
Fig. 9 is a schematic diagram showing the data structure of provisional management information recorded on the memory card.

### [Description of Embodiments]

The following describes preferred embodiments of the present invention with reference to the drawings.

### <Embodiment 1>

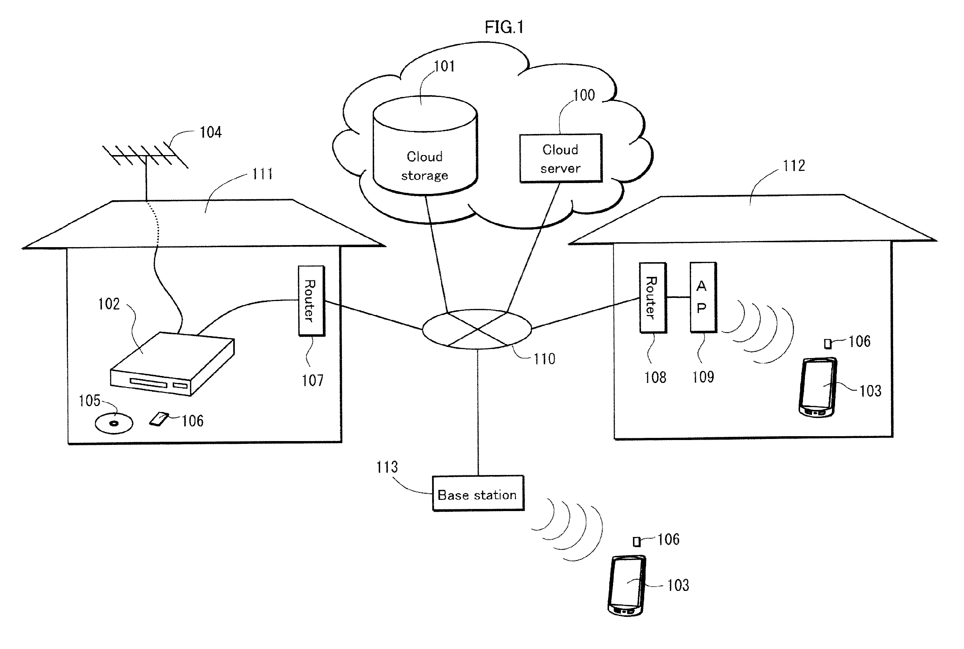

Fig. 1 is a schematic diagram showing a content transmission system according to Embodiment 1 of the present invention. As shown in Fig. 1, this system includes a cloud server 100, a cloud storage 101, a recording/reproducing device 102 and a portable terminal device 103.

The cloud server 100 is an application server located on a network 110 which is the Internet for example. The cloud server 100 provides a client device accessing the cloud storage 101 with a browser for referring to data stored in the cloud storage 101 and a platform for enabling the browser to operate. The cloud storage 101 is a large capacity storage device such as an HDD, and is located on the network 110.

The recording/reproducing device 102 is a home-use device such as a hard disk recorder or an optical disc player. The recording/reproducing device 102 is connected to an outdoor antenna 104, and records programs of digital terrestrial broadcasting or digital satellite broadcasting. The recording/reproducing device 102 also reproduces content from a portable recording medium. The portable recording medium, which is an optical disc 105 or a memory card 106 for example, is a recording medium that can be detachably connected to the recording/reproducing device 102. The portable recording medium may be a device having a built-in semiconductor memory such as a personal data assistant and a portable audio player. The device connects the built-in memory to the recording/reproducing device 102 via a USB (Universal Serial Bus) cable, for example. The recording/reproducing device 102 is furthermore connected to the network 110 via a router 107. Through the connection, the recording/reproducing device 102 encrypts recorded content or content reproduced from the portable recording medium 105 or 106 according to a common key cryptosystem, and uploads the encrypted content to the cloud storage 101. The encryption key used for encrypting the content is recorded on a portable recording medium such as the memory card 106.

The portable terminal device 103 is a smartphone or a tablet personal computer. The portable terminal device 103 connects to the network 110 via a router 108 and an access point (AP) 109 in a house 112 that is different from a house 111 in which the recording/reproducing device 102 is located. Alternatively, the portable terminal device 103, when located outside the houses, connects to the network 110 via a base station 113 for a mobile telephone network. The portable terminal device 103 downloads the encrypted content from the cloud storage 101 via the network 110. Meanwhile, the portable terminal device 103 acquires the encryption key via the memory card 106. The portable terminal device 103 decrypts content from the encrypted content by using the encryption key. The portable terminal device 103 includes a reproducing unit, with which the portable terminal device 103 reproduces the content.

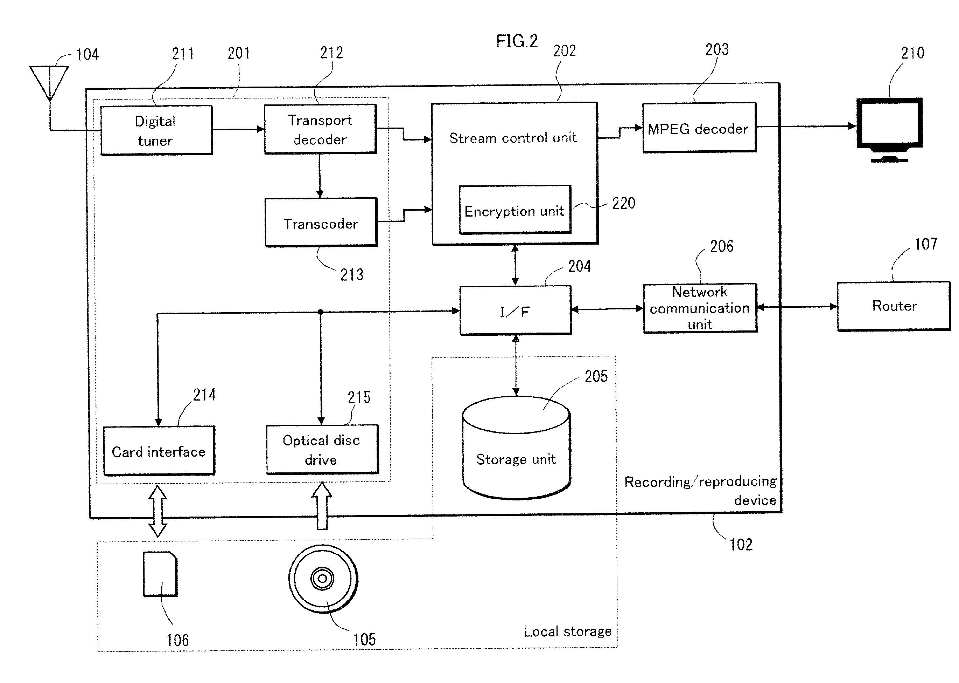

Fig. 2 is a block diagram of the recording/reproducing device 102 shown in Fig. 1. As shown in Fig. 2, the recording/reproducing device 102 includes a content acquiring unit 201, a stream control unit 202, an MPEG decoder 203, an interface (I/F) 204, a storage unit 205, and a network communication unit 206.

The content acquiring unit 201 includes a system for acquiring content from digital broadcasting and a system for acquiring content from a portable recording medium. The former includes a digital tuner 211, a transport decoder 212 and a transcoder 213. The latter includes a card interface 214 and an optical disc drive 215. The digital tuner 211 receives digital broadcast signals via the antenna 104, and extracts a transport stream (TS) from the broadcast signals. The term "TS" refers to a program that is broadcast on a particular channel. At the time a TS is output from the digital tuner 211, the TS has been scrambled. The transport decoder 212 receives the TS from the digital tuner 211, and first descrambles the TS. Next, the transport decoder 212 analyzes the TS, removes packets that are unnecessary for reproduction of the program, and passes the remaining packets to the stream control unit 202 and the transcoder 213. The transcoder 213 once decodes the packets received from the transport decoder 212, and then encodes the packets according to the MPEG/AVC standards, for example. Thus, the TS is converted so as to have a lower bitrate than the original TS. To the card interface 214, the memory card 106, which is a Memory Stick _{TM} or an SD (Secure Digital) card for example, is detachably attached. The card interface 214 exchanges data with the memory card 106. To the optical disc drive 215, the optical disc 105, which is a Blu-ray disc _{TM} or a DVD for example, is detachably attached. The optical disc drive 215 reads data from the optical disc 105.

The stream control unit 202 causes the content acquiring unit 201 to acquire desired content in response to a user instruction, and reproduces the content, or records the content on either the local storage or the cloud storage 101. Here, the term "local storage" refers to recording media attached to the recording/reproducing device 102, which includes the optical disc 105, the memory card 106 and the storage unit 205. Specifically, the stream control unit 202 receives the TS from the transport decoder 212 or the transcoder 213, and passes the TS to the MPEG decoder 203 when reproducing the TS. Meanwhile, when recording the TS, the stream control unit 202 selects the recording destination between the local storage and the cloud storage 101, and then passes the TS to the 1/F 204 and causes the 1/F 204 to send the TS to the selected storage. Alternatively, the stream control unit 202 reads a TS from the memory card 106 or the optical disc 105 via the I/F 204, the card interface 214 and the optical disc drive 215. When reproducing the TS, the stream control unit 202 passes the TS to the MPEG decoder 203. When recording the TS, the stream control unit 202 passes the TS to the I/F 204 and causes the I/F 204 to send the TS to the selected storage.

The stream control unit 202 includes an encryption unit 220. When the stream control unit 202 records the TS to the cloud storage 101, the encryption unit 220 encrypts the TS to be passed to the 1/F 204 according to a common key cryptosystem. In the following the encryption key used for encrypting a TS is referred to as "title key". The encryption unit 220 furthermore reads necessary information for encrypting the title key from the memory card 106 via the 1/F 204 and the card interface 214. Specifically, if CPRM (Content Protection for Recordable Media) is adopted in the memory card 106, the encryption unit 220 reads an MKB (Media Key Block) and a media 1D from the memory card 106. They are used together with a device key held by the encryption unit 220 in order to generate a media unique key. The encryption unit 220 encrypts the title key according to a common key cryptosystem, by using the media unique key. If CPRM is adopted in the memory card 106, the C2 cryptosystem is used as the common key cryptosystem.

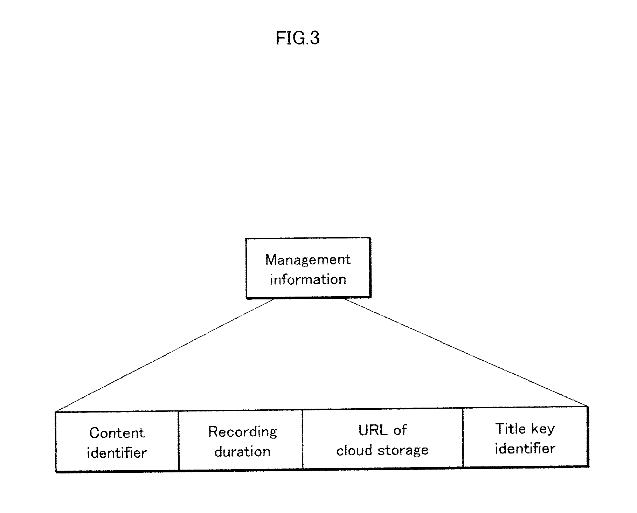

When encrypting content, the encryption unit 220 generates management information for the content. Fig. 3 is a schematic diagram showing the data structure of the management information. As shown in Fig. 3, the management information includes an identifier of the content, a recording duration, the URL (Uniform Resource Locator) of the cloud storage 101, and an identifier of the encrypted title key. The identifier of the content shows, for example, the name of a program, a title, or the name of a file containing the TS. The recording duration shows a length of a portion to be recorded of the content. The URL of the cloud storage 101 is address information of the cloud storage 101, and particularly indicates the address of the TS stored in the cloud storage 101. The identifier of the title key shows, for example, a file name given to the title key.

The encryption unit 220 encrypts the title key, and also determines whether the memory card 106 has been attached to the card interface 214 when generating the management information. If the memory card 106 has been attached to the card interface 214, the encryption unit 220 determines whether the media unique key generated by the encryption unit 220 matches the media unique key held by the memory card 106. If the media unique keys match each other, the encryption unit 220 is permitted to record the encrypted title key and the management information into a secure area in the memory card 106. Here, the term "secure area" refers to a recording area where a device is permitted to access when the device succeeds in the authentication with the media unique keys. When the authentication is successful, the encryption unit 220 passes the encrypted title key and the management information to the card interface 214 via the 1/F 204, and causes the card interface 214 to write them into the secure area of the memory card 106. Note that the management information may be written into a user accessible area in the memory card 106. The term "user accessible area" refers to a recording area where a device is permitted to access without authentication.

The MPEG decoder 203 receives the TS from the stream control unit 202, and converts the TS into signals that are in a suitable format for an output to a display device 210. The signals after the conversion are sent to the display device 210.

The I/F 204 relays data among the stream control unit 202, the card interface 214, the optical disc drive 215, the storage unit 205 and the network communication unit 206. In particular, when the local storage is selected as the recording destination of the TS, the 1/F 204 transfers the TS from the stream control unit 202 to the storage unit 205. Meanwhile, when the cloud storage 101 is selected as the recording destination of the TS, the 1/F 204 transfers the encrypted TS from the stream control unit 202 to the storage unit 205, and transfers the encrypted title key and the management information from the stream control unit 202 to the memory card 106 via the card interface 214.

The storage unit 205 is a large capacity storage device such as an HDD, and is built in the recording/reproducing device 102. When the local storage is selected as the recording destination of the TS, the storage unit 205 receives the TS from the stream control unit 202 via the I/F 204, and stores the TS therein. The TS remains stored in the storage unit 205, or is recorded onto the memory card 106 via the card interface 214, or is recorded onto the optical disc 105 via the optical disc drive 215. When the cloud storage 101 is selected as the recording destination of the TS, the storage unit 205 temporarily stores the encrypted TS.

The network communication unit 206 communicates with the network 110 via the router 107. In particular, when the cloud storage 101 is selected as the recording destination of the TS, the network communication unit 206 reads the encrypted TS from the storage unit 205 via the 1/F 204, and uploads the encrypted TS to the cloud storage 101 via the router 107.

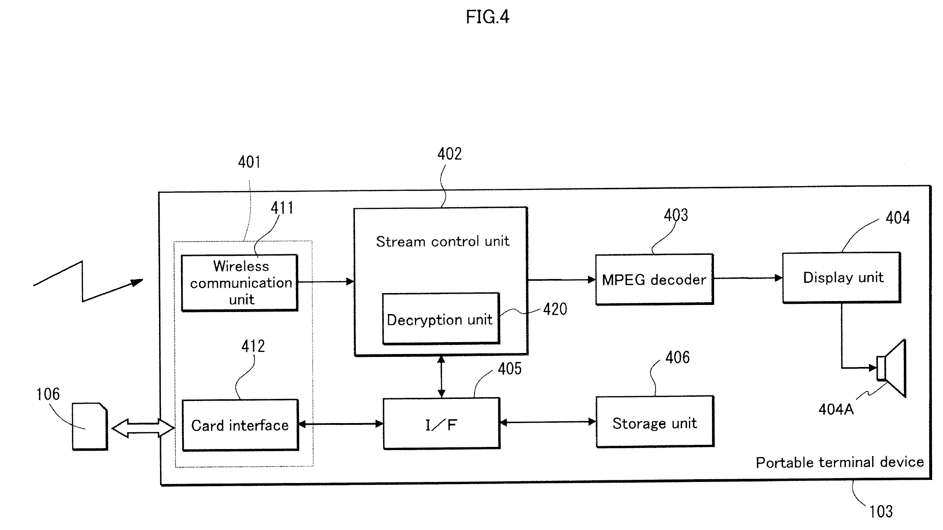

Fig. 4 is a block diagram showing the structure of the portable terminal device 103 shown in Fig. 1. As shown in Fig. 4, the portable terminal device 103 includes a content acquiring unit 401, a stream control unit 402, an MPEG decoder 403, a display unit 404, an 1/F 405, and a storage unit 406.

The content acquiring unit 401 includes a wireless communication unit 411 and a card interface 412. The wireless communication unit 411 is capable of communicating with the AP 109 and the base station 113 via wireless connection. In particular, the wireless communication unit 411 downloads the TS from the cloud storage 101 via them. To the card interface 412, the memory card 106, which is an SD card for example, is detachably attached. The card interface 412 relays data between the memory card 106 and the I/F 405.

The stream control unit 402 causes the content acquiring unit 401 to acquire content in response to a user instruction, and reproduces the content. Specifically, the stream control unit 402 first reads the management information from the memory card 106 via the I/F 405 and the card interface 412, and accesses the URL indicated by the management information. Consequently, the stream control unit 402 acquires, from the cloud server 100, a browser for referring to data stored in the cloud storage 101 and a platform for enabling the browser to operate. The stream control unit 402 starts up the browser under the environment that has been set with the platform, and downloads, from the cloud storage 101 to the wireless communication unit 411, the TS representing the content indicated by the management information, in response to an instruction made by the browser. Next, the stream control unit 402 receives the TS from the wireless communication unit 411, and passes the TS to the MPEG decoder 403. In this regard, the stream control unit 402 may pass the content to the MEPG decoder 403 after saving the entire content into the storage unit 405, or may pass a portion of the content to the MPEG decoder 403 every time the stream control unit 402 receives the portion of the content from the wireless communication unit 411.

The stream control unit 402 includes a decryption unit 420. The decryption unit 420 decrypts the TS received from the wireless communication unit 411. In this regard, the decryption unit 420 reads necessary information for decrypting the TS from the memory card 106 via the I/F 405 and the card interface 412. Specifically, if CPRM is adopted in the memory card 106, the decryption unit 420 first reads an MKB and a media ID from the memory card 106. The decryption unit 420 generates a media unique key by using the read data together with a device key held by the decryption unit 420. Next, the decryption unit 420 determines whether the media unique key generated by the decryption unit 420 matches the media unique key held by the memory card 106. If the media unique keys match each other, the decryption unit 420 is permitted to read the encrypted title key from the memory card 106. Subsequently, the decryption unit 420 reads the encrypted title key from the memory card 106 by using the identifier of the title key indicated by the management information, decrypts the title key by using the media unique key, and furthermore decrypts the TS by using the title key.

The MPEG decoder 403 receives the TS from the stream control unit 402, and converts the TS into signals that are in a suitable format for being output to the display unit 404. The signals after the conversion are sent to the display unit 404.

The display unit 404 includes a liquid crystal display. Alternatively, the display unit 404 may include an organic EL display. The display unit 404 further includes a speaker. The display unit 404 creates a browser display area on the screen according to an instruction from the stream control unit 402. The display unit 404 reproduces images of the content according to the signals received from the MPEG decoder 403, and outputs sounds from the speaker 404A.

The I/F 405 relays data among the stream control unit 402, the card interface 412, and the storage unit 406. In particular, the I/F 405 reads the management information and the title key from the memory card 106 via the card interface 412, and passes the read data to the stream control unit 402.

The storage unit 406 is a semiconductor memory built in the portable terminal device 103. The storage unit 406 provides the stream control unit 402 with a work memory area. The stream control unit 402 sets an environment requested by the platform, by using the storage unit 406.

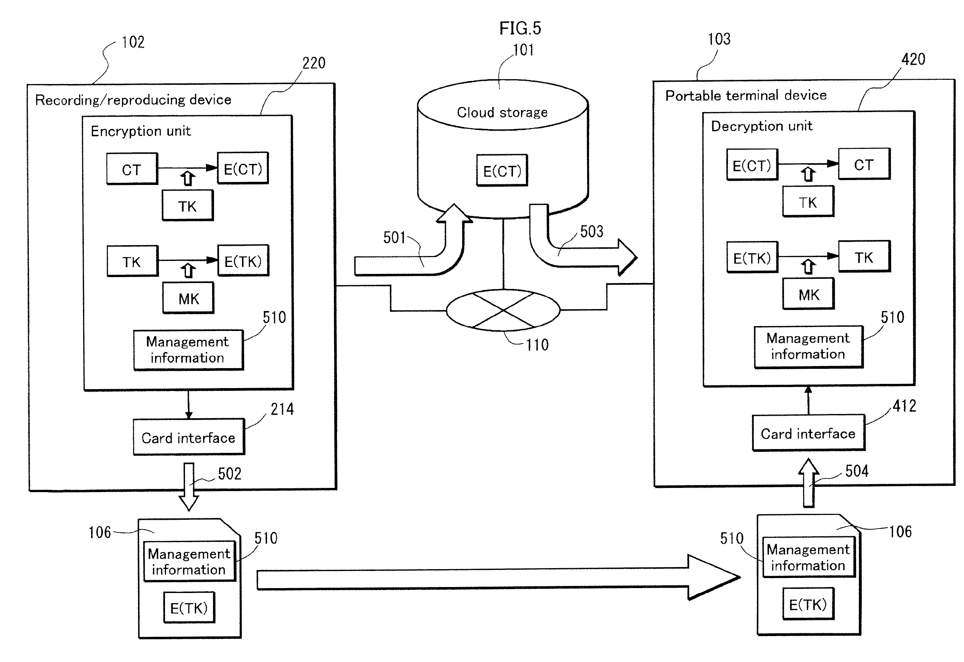

Fig. 5 is a schematic diagram showing a process through which content is transmitted from the recording/reproducing device 102 to the portable terminal device 103 via the cloud storage 101. As shown in Fig. 5, in the recording/reproducing device 102, the encryption unit 220 first generates management information 510 pertaining to content CT that is to be transmitted. Next, the encryption unit 220 generates a title key TK, and encrypts the content CT by using the title key TK. The encryption unit 220 thereby generates an encrypted content E(CT). Subsequently, the stream control unit 202 determines whether the memory card 106 is attached to the card interface 214. If the memory card 106 is attached to the card interface 214, the encryption unit 220 reads necessary information for encrypting the title key TK, namely a MKB and a media ID, from the memory card 106 via the card interface 214. By using the information together with the device key of the recording/reproducing device 102, the encryption unit 220 generates a media unique key MK. The encryption unit 220 furthermore performs authentication with the memory card 106 by using the media unique key MK. Specifically, the encryption unit 220 determines whether the media unique key MK so generated matches the media unique key stored in the memory card 106. If the media unique keys match each other, the encryption unit 220 is permitted to record an encrypted title key E(TK) into the memory card 106. Subsequently, the encryption unit 220 encrypts the title key TK by using the media unique key MK to generate the encrypted title key E(TK). Finally, the encryption unit 220 uploads the encrypted content E(CT) to the cloud storage 101 via the network 110 as indicated by an arrow 501 in Fig. 5, and records the management information 510 and the encrypted title key E(TK) to the memory card 106 via the card interface 214 as indicated by an arrow 502 in Fig. 5.

As also shown in Fig. 5, the memory card 106 is attached to the portable terminal device 103 after the management information 510 and the encrypted title key E(TK) are stored in the memory card 106. In the portable terminal device 103, the decryption unit 420 reads information for decrypting the title key TK, namely the MKB and the media ID, from the memory card 106 via the card interface 412. The decryption unit 420 generates a media unique key MK by using the information together with the device key of the portable terminal device 103. The decryption unit 420 furthermore performs authentication with the memory card 106 by using the media unique key MK. Specifically, the decryption unit 420 determines whether the media unique key MK so generated matches the media unique key stored in the memory card 106. If the media unique keys match each other, the decryption unit 420 is permitted to read the encrypted title key E(TK) from the memory card 106. Next, as indicated by an arrow 504 in Fig. 5, the decryption unit 420 reads the management information 510 from the memory card 106 via the card interface 412. Subsequently, the stream control unit 402 accesses the URL indicated by the management information 510.

At this point, if the correct title key TK is read from the memory card 106, user authentication is unnecessary between the stream control unit 402 and the cloud storage 101. This is for the following reasons. The fact that the correct title key TK is recorded in the memory card 106 usually means that the user who attaches the memory card 106 to the portable terminal device is the person who uploaded the content from the recording/reproducing device 102 to the cloud storage 101, or another person who took over the right to reproduce the content from the person uploaded the content. Hence, even though user authentication is not performed when the portable terminal device 103 downloads the content from the cloud storage 101, it can be assumed that reproducing the content is allowed only for the personal use.

Since user authentication is unnecessary between the stream control unit 402 and the cloud storage 101, it is unnecessary for the user to pass his/her personal information such as his/her ID and a password, to the cloud storage 101. Hence, there is no risk that the personal information of the user will be leaked when the user accesses the cloud storage 101 with the portable terminal device 103.

As indicated by an arrow 503 in Fig. 5, the encrypted content E(CT) is downloaded from the cloud storage 101 to the stream control unit 402 via the network 110. Subsequently, the decryption unit 420 reads the encrypted title key E(TK) from the memory card 106 by using the identifier of the title key TK indicated by the management information 510. The decryption unit 420 furthermore decrypts the title key TK from the encrypted title key E(TK) by using the media unique key MK, and decrypts the content CT from the encrypted content E(CT) by using the title key TK.

In the content transmission system according to Embodiment 1 of the present invention, user authentication is unnecessary between the stream control unit 402 and the cloud storage 101 when the portable terminal device 103 accesses the cloud storage 101 as described above. Hence, the system is capable of saving time and effort in transmitting content from the recording/reproducing device 102 to the portable terminal device 103 via the cloud storage 101, and reducing the risk of personal information leakage.

Furthermore, in the content transmission system according to Embodiment 1 of the present invention, the recording/reproducing device 102 encrypts the content CT and uploads it to the cloud storage 101, and the portable terminal device 103 downloads the content CT from the cloud storage 101, as described above. Thus, the encrypted content E(CT) is transmitted from the recording/reproducing device 102 to the portable terminal device 103 via the cloud storage 101. That is, for the transmission, each of the devices 102 and 103 only needs to connect to the cloud storage 101 individually, and the devices 102 and 103 need not to connect directly to each other. Hence, the portable terminal device 103 needs not to control the operations of the recording/reproducing device 102 such as power-on and content transmission start. As a result, the encrypted content E(CT) can be easily transmitted from the recording/reproducing device 102 to the portable terminal device 103. The encrypted title key E(TK) is transmitted from the recording/reproducing device 102 to the portable terminal device 103 by the memory card 106. The portable terminal device 103 is allowed to decrypt the content CT from the encrypted content E(CT) only when the portable terminal device 103 succeeds in authentication with the memory card 106 and successfully decrypts the title key TK from the encrypted title key E(TK). Hence, there is a restriction on reproduction of the content CT even though authentication is not performed between the cloud storage 101 and the portable terminal device 103. In the stated manner, the content transmission system according to Embodiment 1 of the present invention is capable of protecting the copyrights of the content CT when transmitting the content CT from the recording/reproducing device 102 to the portable terminal device 103 via the network 110.

Moreover, in the system according to Embodiment 1 above, the encryption unit 220 of the recording/reproducing device 102 generates the management information 510 related to the content CT, and stores the management information 510 into the memory card 106. Meanwhile, the portable terminal device 103 reads the management information 510 from the memory card 106 to specify the URL of the cloud storage 101 and the content CT to be downloaded, and identifies the title key TK to be read from the memory card 106. With the use of the management information 510, the system can cause the portable terminal device 103 to download the encrypted content E(CT) from the cloud storage 101, and to identify the title key TK required for decryption of the content CT.

### <Embodiment 2>

As with the content transmission system according to Embodiment 1, a content transmission system according to Embodiment 2 of the present invention encrypts content and then transmits the encrypted content from a recording/reproducing device located in the home to a portable terminal device located outside the home via a network such as the Internet. However, unlike the system according to Embodiment 1, the system according to Embodiment 2 generates a plurality of title keys before acquiring content, and stores the title keys into the storage unit of the recording/reproducing device while encrypting the title keys and writing the encrypted title keys into the memory card. Furthermore, when encrypting the content, the system generates identification information of a title key used for encrypting the content, and uploads the identification information together with the encrypted content to the cloud storage. Meanwhile, the portable terminal device downloads the identification information together with the encrypted content from the cloud storage, and extracts an appropriate encrypted title key from the memory card by using the identification information. The other features of the system according to Embodiment 2 are similar to the system according to Embodiment 1. Hence, the details of the similar features can be found in the explanation about Embodiment 1.

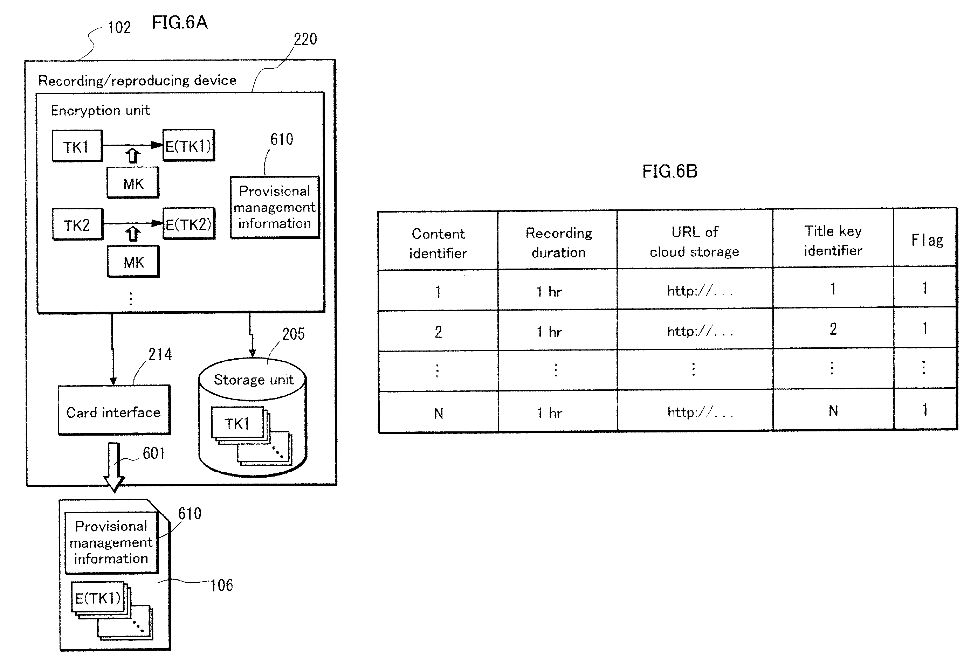

Fig. 6A is a schematic diagram showing a process through which the recording/reproducing device encrypts a plurality of title keys and writes them into the memory card. As shown in Fig. 6A, the encryption unit 220 generates a plurality of title keys TKm (m=1, 2, 3, ... ,N. The letter N represents an integer that is equal to or greater than 2) and provisional management information 610. The stream control unit 202 causes the encryption unit 220 to generate them when it is expected that the cloud storage 101 will be selected as the recording destination of the content, such as when scheduled recording of a broadcast program is instructed by a user.

Fig. 6B is a schematic diagram showing the data structure of the provisional management information 610. As shown in Fig. 6B, the provisional management information 610 has N data entries, where the letter N represents a number equal to the number of the title keys. Each data entry has a similar structure to the data structure of the management information shown in Fig. 3. Note that it is assumed here that the content identifiers indicate serial numbers 1, 2, ... , N, and all the recording durations indicate a predetermined value (e.g. 1 hour). At this moment, the recording/reproducing device 102 has not received any content. Hence, none of the sets of content corresponding to the content identifiers and the recording durations contained in the provisional management information 610 do not exist in reality. The provisional management information 610 further contains flags indicating that. That is, when one of the flags indicates "1", a set of content corresponding to a content identifier does not exist in reality. When the flag indicates "0", the set of content corresponding to the content identifier actually exists in reality. The provisional management information 610 also contains the URL of the cloud storage 101 and the identifiers of the title keys TKm. Each of the content identifiers is associated with a different one of the identifiers of the title keys TKm.

After the encryption unit 220 generates the title keys TKm, the stream control unit 202 determines whether the memory card 106 is attached to the card interface 214. If the card interface 214 is attached to the memory card 106, the encryption unit 220 reads necessary information for encrypting the title keys TKm such as an MKB and a media ID, from the memory card 106 via the card interface 214. The encryption unit 220 generates a media unique key MK by using the information, and encrypts each of the title keys TKm by using the media unique key MK to generate encrypted title keys E(TKm). The encryption unit 220 furthermore performs authentication with the memory card 106 by using the media unique key MK. If the authentication is successful, the encryption unit 220 is permitted to record the encrypted title keys E(TKm) into the memory card 106. Subsequently, the encryption unit 220 stores the title keys TKm into the storage unit 205, while writing the provisional management information 610 and the encrypted title keys E(TKm) into a secure area in the memory card 106 via the card interface 214, as indicated by an arrow 601 in Fig. 6A. Note that the provisional management information 610 may be written into a user accessible area in the memory card 106.

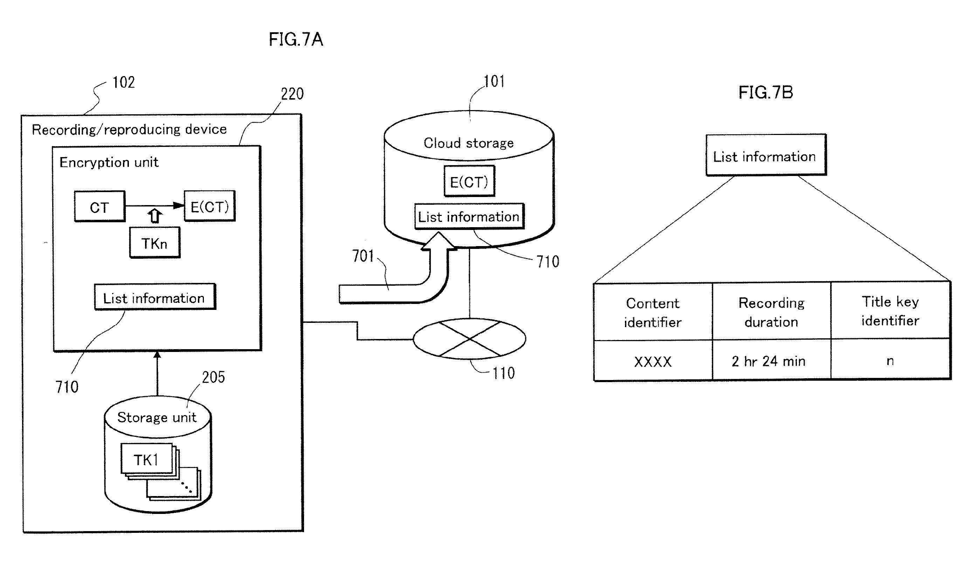

Fig. 7A is a schematic diagram showing a process through which the recording/reproducing device encrypts a single set of content by using a single title key and uploads the content to the cloud storage. As shown in Fig. 7A, when the stream control unit 202 of the recording/reproducing device 102 receives the content CT to be transmitted, the encryption unit 220 first selects one key TKn (1≤n≤N) from among the plurality of title keys TKm stored in the storage unit 205. Next, the encryption unit 220 encrypts the content CT by using the selected title key TKn. The encryption unit 220 thereby generates an encrypted content E(CT). The encryption unit 220 furthermore generates list information 710. Fig. 7B is a schematic diagram showing the data structure of the list information. As shown in Fig. 7B, the list information 710 includes, in addition to the identifier and the recording duration of the content CT, the identifier of the title key TKn used for encryption of the content CT. After generating the list information 710, the encryption unit 220 uploads the list information 710 and the encrypted content E(CT) to the cloud storage 101 via the network 110, as indicated by an arrow 701 in Fig. 7A. The list information 710 and the encrypted content E(CT) are given predetermined file names. The portable terminal device can download the list information 710 and the encrypted content E(CT) by accessing the URL of the cloud storage 101.

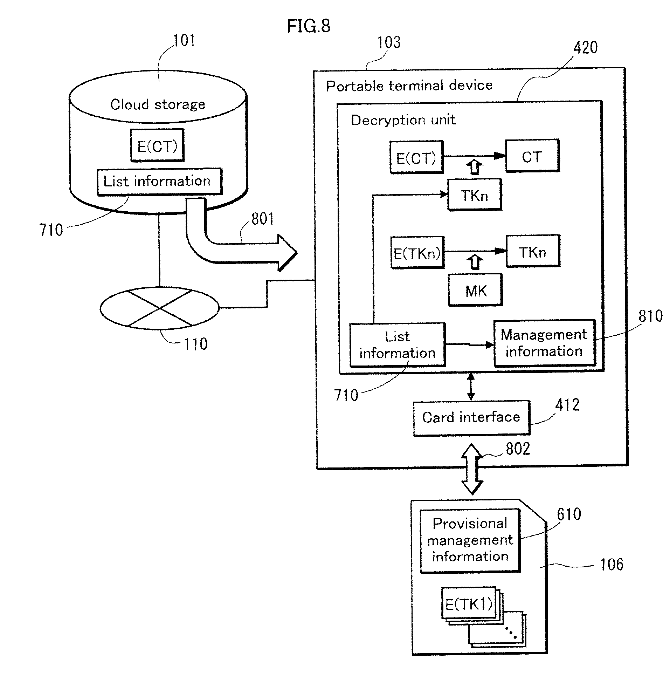

Fig. 8 is a schematic diagram showing a process through which the portable terminal device downloads encrypted content from the cloud storage. As shown in Fig. 8, the memory card 106 is attached to the portable terminal device 103 after the provisional management information and the plurality of encrypted title keys E(TKm) are stored in the memory card 106. Then, the decryption unit 420 of the portable terminal device 103 reads information for decrypting the title keys TKm, namely the MKB and the media ID, from the memory card 106 via the card interface 412. The decryption unit 420 generates a media unique key MK by using the information together with the device key of the portable terminal device 103. The decryption unit 420 furthermore determines whether the media unique key MK so generated matches the media unique key stored in the memory card 106. If the media unique keys match each other, the decryption unit 420 is permitted to read the encrypted title keys E(TKm) from the memory card 106. Next, the stream control unit 402 of the portable terminal device 103 reads the provisional management information from the memory card 106 via the card interface 412, and accesses the URL indicated by the management information. At this point, user authentication is unnecessary between the stream control unit 402 and the cloud storage 101. As with Embodiment 1, the fact that the correct title keys TKm are recorded in the memory card 106 usually means that the user who attaches the memory card 106 to the portable terminal device is the person who uploaded the content from the recording/reproducing device 102 to the cloud storage 101, or another person who took over the right to reproduce the content from the person uploaded the content. As indicated by an arrow 801 in Fig. 8, the encrypted content E(CT) and the list information 710 are downloaded from the cloud storage 101 to the stream control unit 402 via the network 110. The decryption unit 420 selects one title key TKn from among the plurality of encrypted title keys E(TKm) stored in the memory card 106 by using the identifier of the title key indicated by the list information 710. Next, as indicated by an arrow 802 in Fig. 8, the decryption unit 420 reads the selected encrypted title key E(TKn) from the memory card 106 via the card interface 412. Subsequently, the decryption unit 420 decrypts the title key TKn from the encrypted title key E(TKn) by using the media unique key MK, and decrypts the content CT from the encrypted content E(CT) by using the title key TKn.

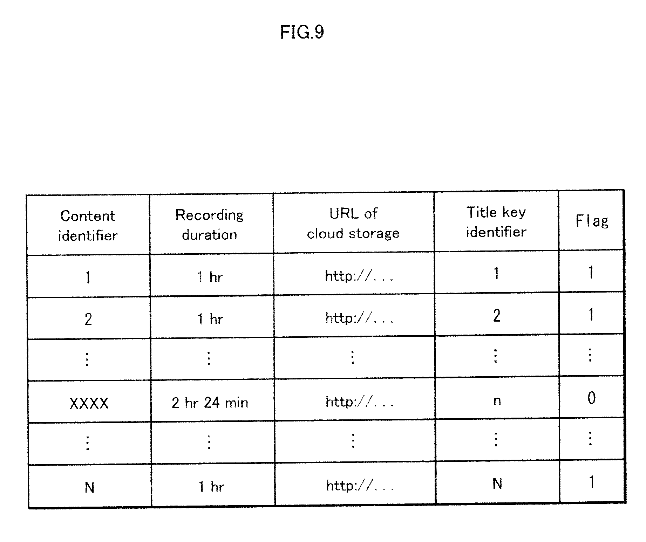

Meanwhile, the decryption unit 420 generates management information 810 for the content CT from the identifier and recording duration of the content CT indicated by the list information 710. The decryption unit 420 furthermore accesses the memory card 106 via the card interface 412, and rewrites the provisional management information by using the management information 810. Fig. 9 is a schematic diagram showing the data structure of the provisional management information recorded on the memory card. As shown in Fig. 9, among entries of the provisional management information 610, the pair of the content identifier and the recording duration associated with the identifier of the title key TKn selected by the decryption unit 420 is replaced with the pair indicated by the management information 810 for the content CT. Furthermore, the value of a flag is replaced with "0". This shows that the pair of the content identifier and the recording duration associated with the flag is those of the content CT which exists in reality. Thus, every time the stream control unit 402 downloads content from the cloud storage 101, the provisional management information for the content is replaced with actual management information.

The content transmission system according to Embodiment 2 of the present invention generates the plurality of title keys TKm before encrypting the content CT that is to be transmitted, and stores the title keys TKm into the storage unit 205 of the recording/reproducing device 102, while converting the title keys TKm to the encrypted title keys E(TKm) and writing the encrypted title keys E(TKm) into the memory card 106. Furthermore, when encrypting the content CT, the system generates the list information 710 containing the identifier of the title key TKn used for encrypting the content CT, and uploads the list information 710 together with the encrypted content E(CT) to the cloud storage 101. Meanwhile, the portable terminal device 103 downloads the list information 710 together with the encrypted content E(CT) from the cloud storage 101, and extracts the proper encrypted title key E(TKn) from the memory card 106 by using the list information 710. Thus, unlike the system according to Embodiment 1, the system according to Embodiment 2 is capable of encrypting the content CT to be transmitted by using one of the title keys, namely the title key TKn, and uploading the encrypted content to the cloud storage 101 even after the recording/reproducing device 102 writes the encrypted title keys E(TKm) into the memory card 106. In the system according to Embodiment 1, a new title key has to be transmitted to the portable terminal device 103 via the memory card 106 every time content is uploaded to the cloud storage 101. In the system according to Embodiment 2, however, it is unnecessary to transfer a new title key to the portable terminal device 103 until the same number of content sets as the plurality of title keys TKm prepared in advance have been uploaded to the cloud storage 101. As a result, the system allows users to save time and effort in transmitting title keys from the recording/reproducing device 102 to the portable terminal device 103.

In the systems according to Embodiments 1 and 2 described above, there is no restriction on copying encrypted content to devices other than the recording/reproducing device 102 such as the cloud storage 101 and the portable terminal device 103. However, there is restriction on copying a key for decrypting the encrypted content, namely a title key, to devices that reproduce content such as the portable terminal device 103. Specifically, making a single copy of the title key is counted as making a single copy of the content. For example, when a single set of content is distributed from the cloud storage to a plurality of portable terminal devices, the number of portable terminal devices that can receive the content is limited to the allowed number of copies of the title key used for the encryption of the content.

In the systems according to Embodiments I and 2 described above, the encrypted title keys are stored in the secure area in the memory card 106. Hence, as described above, the recording/reproducing device 102 performs authentication with the memory card 106 when writing the title keys into the memory card 106, and the portable terminal device 103 performs authentication with the memory card 106 when reading the title keys from the memory card 106. When a title key is recorded in the secure area, the title key is not necessarily to be encrypted. This is because only devices that have succeeded in the authentication can read the title key from the secure area. Alternatively, when a title key has been encrypted, the title key may be recorded in a user accessible area in the memory card 106. This is because, even when an encrypted title key is read out improperly it can not be used for decryption of encrypted content.

In the systems according to Embodiments 1 and 2, content sets to be uploaded to the cloud storage 101 have a single resolution. Alternatively, the recording/reproducing device 102 may encode content at two resolutions, namely HD (High Definition) and SD (Standard Definition), and then upload the encoded content sets to the cloud storage 101. If this is the case, the portable terminal device 103 selects content with the resolution of HD or SD according to the state of bands used by the network 110, and downloads the selected content from the cloud storage 101. Thus, when the network 110 is busy and it is difficult to transfer data at a high bit rate, the portable terminal device 103 can download the content with the SD resolution in place of the content with the HD resolution. As a result, the user can view the content on the portable terminal device 103 regardless of the state of the network 110.

### [Industrial Applicability]

The present invention relates to technology of transmitting content via a network, and, as described above, content is transmitted via a cloud storage after being encrypted, and a title key used for encrypting the content is transmitted via a memory card. Thus it is clear that the present invention is industrially applicable.

### [Reference Signs List]

100: Cloud Server
101: Cloud Storage
102: Recording/Reproducing Device
103: Portable Terminal Device
106: Memory Card
110: Network
214: Card Interface
220: Encryption Unit
412: Card Interface
420: Decryption Unit
501: Uploading of Encrypted Content
502: Writing of Encrypted Title Key
503: Downloading of Encrypted Content
504: Reading of Encrypted Title Key
510: Management Information
CT: Content to be Transmitted
E(CT): Encrypted Content
TK: Title Key
E(TK): Encrypted Title Key
MK: Media Unique Key

## Claims

1. A recording device for recording content to either a local storage or a cloud storage, comprising:
a content acquiring unit configured to acquire the content;
a control unit configured to select either the local storage or the cloud storage as a recording destination of the content;
a recording unit configured to record the content to the local storage when the local storage is selected as the recording destination;
an encryption unit configured to, when the cloud storage is selected as the recording destination, generate an encryption key, encrypt the content by using the encryption key, and generate management information that associates the encryption key with address information of the cloud storage; and
a communication unit configured to upload the encrypted content to the cloud storage, wherein
the local storage includes a plurality of recording media, and one of the recording media is a portable recording medium detachably connected to the recording unit and connectable to a terminal device after being detached from the recording unit,
when the cloud storage is selected as the recording destination, the control unit determines whether the portable recording medium is connected to the recording unit, and
when determining that the portable recording medium is connected to the recording unit, the control unit causes the recording unit to record the encryption key and the management information to the portable recording medium.

2. The recording device of Claim 1, wherein
the encryption unit generates a plurality of encryption keys, and when the cloud storage is selected as the recording destination, selects an encryption key from among the plurality of encryption keys, encrypts the content by using the encryption key, and generates list information that associates the encryption key with the content,
the control unit determines whether the portable recording medium is connected to the recording unit before the encryption unit encrypts the content, and when determining that the portable recording medium is connected to the recording unit, causes the recording unit to record the plurality of encryption keys and the management information to the portable recording medium, and
the communication unit uploads the list information to the cloud storage together with the encrypted content.

3. A terminal device for reproducing content from a cloud storage, comprising:
a reading unit to which a portable recording medium is detachably connected, the reading unit configured to read an encryption key and management information from the portable recording medium, the management information associating the encryption key with address information of the cloud storage;
a communication unit configured to access the cloud storage with reference to the management information, and download encrypted content from the cloud storage;
a decryption unit configured to decrypt the content from the encrypted content by using the encryption key; and
a reproducing unit configured to reproduce the content.

4. The terminal device of Claim 3, wherein
the portable recording medium contains a plurality of encryption keys,
the communication unit downloads list information from the cloud storage together with the encrypted content, the list information associating an encryption key with the content, the encryption key used for generating the encrypted content, and
the decryption unit selects an encryption key from among the plurality of encryption keys by using the list information, and decrypts the content from the encrypted content by using the encryption key.

5. A content transmission system for using cloud computing, comprising:
a local storage including a plurality of recording media, one of the recording media being a portable recording medium;
a cloud storage located on a network;
a recording device configured to record the content to either the local storage or the cloud storage; and
a terminal device configured to reproduce the content from the cloud storage, wherein
the recording device includes:
a content acquiring unit configured to acquire the content;
a control unit configured to select either the local storage or the cloud storage as a recording destination of the content;
a recording unit to which the portable recording medium is detachably connected, the recording unit configured to record the content to the local storage when the local storage is selected as the recording destination;
an encryption unit configured to, when the cloud storage is selected as the recording destination, generate an encryption key, encrypt the content by using the encryption key, and generate management information that associates the encryption key with address information of the cloud storage; and
a first communication unit configured to upload the encrypted content to the cloud storage, wherein
when the cloud storage is selected as the recording destination, the control unit determines whether the portable recording medium is connected to the recording unit,
when determining that the portable recording medium is connected to the recording unit, the control unit causes the recording unit to record the encryption key and the management information to the portable recording medium, and
the terminal device includes:
a reading unit to which the portable recording medium is detachably connected, the reading unit configured to read the encryption key and the management information from the portable recording medium;
a second communication unit configured to access the cloud storage with reference to the management information, and download the encrypted content from the cloud storage;
a decryption unit configured to decrypt the content from the encrypted content by using the encryption key; and
a reproducing unit configured to reproduce the content.
